# EUROPEAN PATENT APPLICATION

(11) **EP 2 975 429 A2**
(43) Date of publication of application: **20.01.2016**
(21) Application number: 15173221.1
(22) Date of filing: 22.06.2015
(51) Int. Cl.: G01S 19/00, G01S 5/00, G06T 17/05

(54) **GEOGRAPHIC ORIENTATION SYSTEM**

(30) Priority: 20.06.2014 PT 2014107724
(71) Applicant: Gomes do Valle e Vasconcellos, Maria Luisa, 4050-628 Porto (PT)
(72) Inventor: GOMES DO VALLE E VASCONCELLOS, MARIA LUÍSA, 4050-628 PORTO (PT)
(74) Representative: Patentree

(57) **Abstract**

The present disclosure describes a geographic orientation system which can be implemented in a digital form, for example, on a mobile or fixed device, in particular on a mobile telephone, tablet or another computer where a digital map is stored, i.e. a geographic map, this map comprising data present in the toponymy of the real locations it represents. In this way, the user can identify his/her location without resorting to a GPS or to any other data connection system. In an embodiment of the disclosure, it is also described to verify if an inserted coordinate corresponds univocally to a region on the map; should it be verified that it does not correspond univocally to a region of the map, receiving the device user's choice of one of the regions of the map to which the coordinate corresponds, or univocally choosing one of the regions of the map to which the coordinate corresponds through the georeferencing signal received by the device.

## Description

### TECHNICAL FIELD

The present disclosure describes a geographic orientation system which can be implemented in a digital form, for example, on a mobile or fixed device, in particular on a mobile telephone, tablet or another computer where a digital map is stored, i.e. a geographic map, the map containing data present in the toponymy of the real locations it represents. In this way, the user can identify his/her location without resorting to a GPS or to any other data connection system.

### GENERAL DESCRIPTION

It is described a geographic orientation system implemented in a digital form, such as a mobile telephone, tablet or other computer, allowing the user to know what his/her geographic position, or geolocation, is without resorting to online means (with access to the Internet), such as a data connection, or to a GPS. This system fits into the general technical area of geographic positioning systems.

An embodiment of the present disclosure describes a method for geolocalization on a map from a coordinate to a computer device with a screen, wherein a region on the map corresponds to a coordinate, comprising the following steps:
a. receiving the insertion of a coordinate by the user of the device;
b. checking if the inserted coordinate univocally corresponds to a region on the map;
c. should it correspond univocally to a region on the map, displaying on the screen the region of the map to which the coordinate corresponds;
d. should it not correspond univocally to a region on the map,
   i. displaying on the screen the regions of the map to which the coordinate corresponds;
   ii. receiving device user's choice of one of the regions on the map to which the coordinate corresponds, or univocally choosing one of the regions of the map to which the coordinate corresponds by the georeferencing signal received by the device;
   iii. displaying on the screen the region of the map chosen.

An embodiment of the present disclosure describes a method for geolocalization wherein the reception of the georeferencing signal by the device is carried out offline, in particular without the improvement of the precision of the georeference through the integration of information external to the device.

An embodiment of the present disclosure describes a method for geolocalization wherein the method disambiguates the choice of one of the regions of the map to which a coordinate by colours, symbols or combinations thereof does not univocally correspond to.

An embodiment of the present disclosure describes a geolocalization method wherein each coordinate comprises an abscissa identifier and a coordinate identifier with regard to two orthogonal axes.

An embodiment of the present disclosure describes a method for geolocalization, wherein each of the possible regions on said map to which a coordinate corresponds is rectangular and/or square and/or organized on a grid, preferably orthogonal.

An embodiment of the present disclosure describes a method for geolocalization wherein from a plurality of coordinates corresponding to a route on said map, comprising the steps of:
a. geolocating the plurality of coordinates corresponding to the route;
b. displaying on the screen the geolocalized regions of the map.

An embodiment of the present disclosure describes a method for geolocalization comprising the additional step of displaying on the screen the points of interest of the regions on the map on the screen.

An embodiment of the present disclosure describes a method for geolocalization comprising the previous step of transferring data from said map, its regions and correspondences with coordinates, from a server.

An embodiment of the present disclosure also describes a computer readable media which comprises computer programme instructions configured for carrying out the method for geolocalization described in the present disclosure.

An embodiment of the present disclosure also describes a computer device with a screen comprising a computer readable media to implement the method for geolocalization described in the present disclosure.

An embodiment of the present disclosure also describes a geographic orientation system implemented in a digital form which can use a mobile or fixed device with memory and processing capacity, wherein a digital map is stored through data transfer from a server, this map containing data present in the real local toponymy it represents and wherein the toponymic data contained in the digital map correspond to the positions on a grid, preferably orthogonal, organized as a two-dimensional matrix, wherein this grid may be formed by polygons, namely rectangular, squares, hexagonals, among others.

An embodiment of the present disclosure describes a geographic orientation system implemented in a digital form, wherein each position of the two-dimensional matrix corresponds to a given real area with the length and width defined on the map scale.

An embodiment of the present disclosure describes a geographic orientation system implemented in a digital form, wherein the insertion of data present in toponymy allows defining spatial localization of the user to be determined without resorting to other positioning systems, such as the GPS.

An embodiment of the present disclosure describes a geographic orientation system implemented in a digital form, wherein processing can be done offline (without a connection to the Internet).

An embodiment of the present disclosure describes a geographic orientation system implemented in a digital form characterized by using a mobile or fixed device with memory and processing capacity, wherein a digital map is stored through the transfer of data from a server, this map containing data present in the real local toponymy it represents wherein the toponymic data contained in the digital map corresponds to the positions of a grid, preferably orthogonal, organized in a two-dimensional matrix.

Another preferential embodiment describes a geographic orientation system implemented in a digital form, making each position of the two-dimensional matrix correspond to a specific real area with the length and width defined on the map scale.

Another preferential embodiment describes a geographic orientation system implemented in a digital form, wherein the insertion of data present in the toponymy allows defining the user's spatial localization without resorting to other positioning systems, namely the GPS, among others.

Another preferential embodiment describes a geographic orientation system implemented in a digital form, wherein processing can be done offline.

The present disclosure allows comparing the size between cities with speed, which does not happen with any other model. With existing maps or digital applications, the size of cities is not calculated. It is possible, for example, to compare the size of the state-country of the Vatican, Porto and London. The cities with more squares are the biggest and vice versa, the ones that have less are smaller. This allows the user to have a global idea of the size of the city and travel times.

From the studies carried out, it is known that 63% of the users (the study covered approximately 600 people) get lost involuntarily.

Studies show that the speed of geolocalization with this system is 4 to 5 times faster than with conventional systems, there being users who are only capable of localizing themselves using the method and object system of the present disclosure. A user takes approximately 13 seconds to perform his/her geolocalization with the method/system of geolocalization described in the present disclosure, instead of the 60 seconds with conventional methodologies. This difference is even more abrupt when we compare users who do not know local languages - for example: German, Bulgarian or Chinese tourists, among others, in a Portuguese city, who are capable of getting around by following the coordinates, making it unnecessary to be able to read street names.

In greater detail, the system operates as follows: the user downloads onto their mobile or fixed device (for example, a mobile telephone or a tablet or another computer) a map which corresponds to the division of the territory into a matrix of approximately 250x250 up to 500x500 real square meters (m²) or any other measure between these two, in particular, for example, 250x250 real m², 300x300 real m², 350x350 real m², 400x400 real m², 450x450 real m² or 500x500 real m². Each position of this map corresponds to an alphanumeric code which represents values of orthogonal positions on the matrix, which is two-dimensional and which we will designate as grid, and these positions are indicated on toponymic plates or close to them. In this way, the user can insert the coordinates found in the toponymy of their device, and know their location with an error equivalent to the dimensions of the cells of the matrix. The main advantages over physical maps, online maps or GPS, are that the user does not need to guide him/herself with street names, locations or other references, nor do they need to obtain an online localization.

If the user is at coordinate R9 and wishes to go to the next coordinate - S9, this allows him/her to know the distance they will need to cover, which will be approximately 300 m, if it is on the grid, wherein the value of each module is 300x300 m². This information allows the user to choose to walk, drive or use public transportation.

The use of this grid allows the user to calculate routes based on the variation of the grid coordinates, also allowing for the calculation of distances and travel time. By defining the size of a cell on the grid, with certain characteristics, for example, 250x250 real m² on the side, 300x300 real m² on the side, 350x350 real m² on the side, 400x400 real m² on the side, 450x450 real m² on the side or 500x500 real m² on the side and knowing how long this distance takes to be covered when walking (3 min, for example), the user will know how long he/she might take to cover, for example, 3 cells of the grid (3 min*3 cells=9 minutes), the expected distance and/or time (not counting the positioning error within the cell) and also the direction.

The letters used in the code can be 26, for example, in a certain alphabet, and should the grid be bigger than the maximum possible number of letters without repetitions defined to represent its cells, repetitions of the same coordinated positions can be distinguished by using other marks, such as symbols, colour codes or other means. So, on the same map, position U15, for example, can be repeated several times, i.e., at least two positions with the same code can exist, being differentiated by these alternative markings.

### Description of the drawings

The following figures provide preferred embodiments for illustrating the description and should not be seen as limiting the scope of the description:

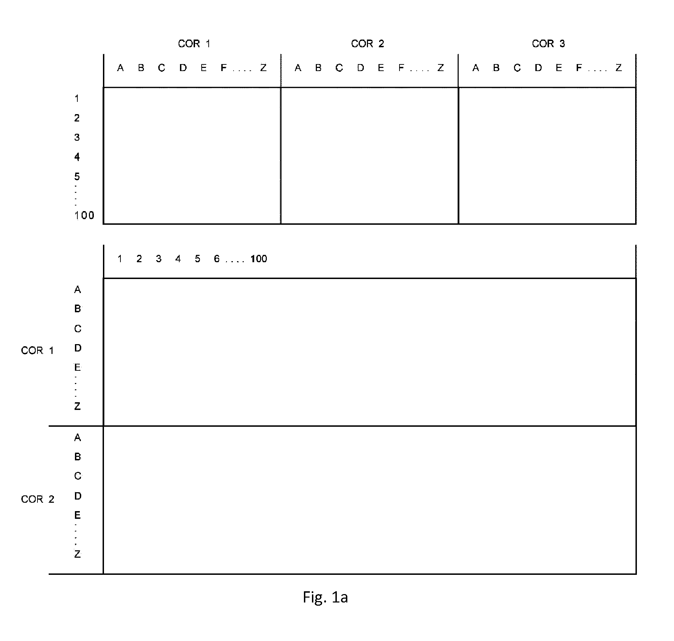

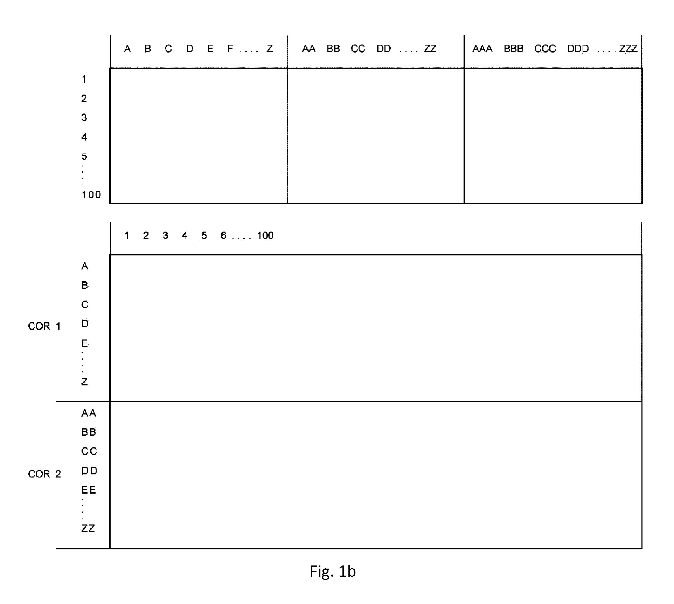

Fig. 1: Map with overlapping alphanumeric grid, with repeated grid coordinates, distinguishable by using symbols and/or colours (Fig. 1a), or with no repetitions on the grid (Fig. 1b), for example by using two letters of the alphabet for the coordinates/columns;

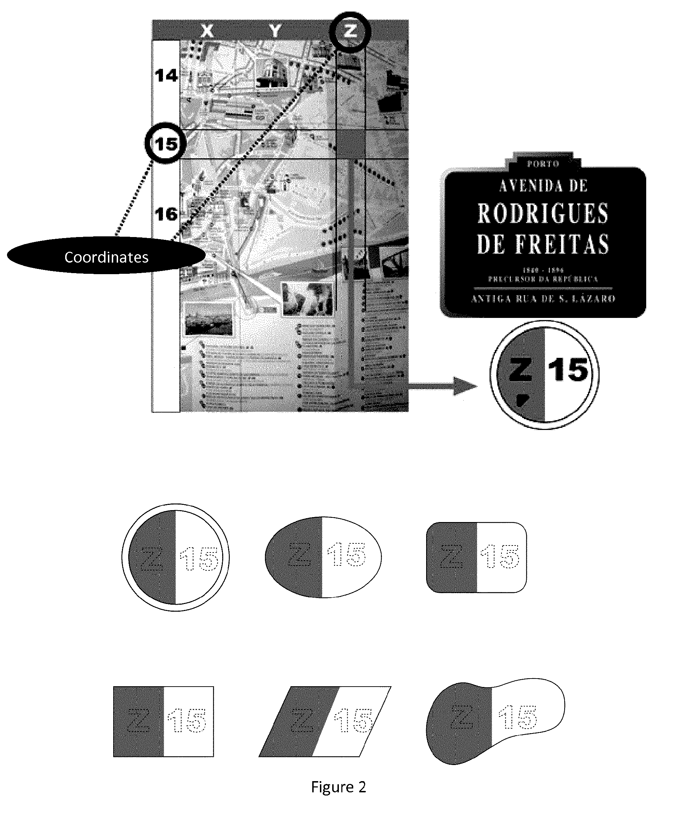

Fig. 2: Example of the signs to be added to the toponymic indications or other appropriate points;

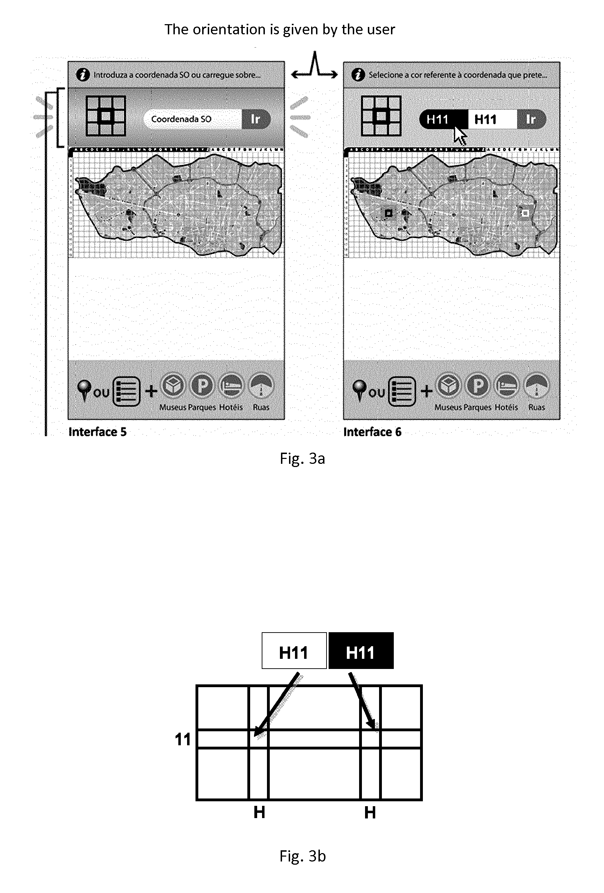

Fig. 3: Map with overlapping alphanumeric grid, with repeated grid coordinates, distinguishable by using symbols and/or colours; where Interface 5 shows the field for the insertion of the coordinate and Interface 6 shows the field after the insertion of the coordinate.

The disclosure is of course not in any way restricted to the embodiments described and a person with ordinary skill in the art will foresee many possibilities to modifications thereof without departing from the basic disclosure as defined in the appended claims.

The disclosed embodiments are combinable.The following claims set out particular embodiments of the disclosure.

## Claims

1. Method for geolocalization on a map from a coordinate to a computerized device with a screen, wherein a region on said map corresponds to a coordinate, comprising the following steps:
a. receiving the insertion of a coordinate by the user of the device;
b. checking if the inserted coordinate univocally corresponds to a region on the map;
c. should it correspond univocally to a region on the map, displaying on the screen the region of the map which corresponds to the coordinate;
d. should it not correspond univocally to a region on the map,
i. displaying on the screen the regions of the map to which the coordinate corresponds;
ii. receiving device user's choice of one of the regions on the map to which the coordinate corresponds, or univocally choosing one of the regions of the map to which the coordinate corresponds by the georeferencing signal received by the device, as per availability of the georeferencing signal;
iii. displaying on the screen the region of the map chosen.

2. Method according to the previous claim, wherein the reception of the georeferencing signal by the device is carried out offline, in particular without the improvement of the precision of georeferencing through the integration of information external to the device.

3. Method of geolocalization according to the previous claims **characterized by** disambiguating the choice of one of the regions of the map to which a coordinate by colours, symbols, or combination thereof, does not correspond univocally.

4. Method of geolocalization according to the previous claims **characterized by** the fact that the coordinate comprises an abscissa identifier and a coordinate identifier, with regard to two orthogonal axes.

5. Method of geolocalization according to the previous claims wherein each of the possible regions on said map which correspond to a coordinate are rectangular and organized on a grid.

6. Method of geolocalization according to the previous claims wherein from a plurality of coordinates corresponding to a route on said map, comprising the steps of:
a. geolocating a plurality of coordinates corresponding to the route;
b. displaying on the screen the geolocalized regions of the map.

7. Method of geolocalization according to the previous claims, comprising the additional step of displaying on the screen the points of interest of the regions of the map on the screen.

8. Method of geolocalization according to the previous claims, comprising the previous step of transferring the data of said map, its regions and correspondences with coordinates, from a server.

9. Computer readable media comprising computer programme instructions configured for carrying out the method according to any one of the previous claims.

10. Computerized device with screen comprising the computer readable media according to the previous claim.

11. Geographic orientation system implemented in digital form **characterized by** using a mobile or fixed device with memory and processing capacity, wherein a digital map is stored through data transfer from a server, the map containing data present in the toponymy of the real locations it represents and wherein the toponymic data contained in the digital map correspond to the positions of a grid organized in the form of a two-dimensional matrix.

12. Geographic orientation system implemented in digital form, according to claim 11, **characterized by** the fact that each position of the two-dimensional matrix corresponds to a specific real area with length and width defined on the map scale.

13. Geographic orientation system implemented in digital form, according with any one of claims 11-12, **characterized by** the fact that the insertion of data present in the toponymy allows defining the spatial localization of the user without resorting to other positioning systems, such as the GPS.

14. Geographic orientation system implemented in digital form, according to any one of claims 11-13, **characterized by** the fact that the processing takes place offline.
